# FASCICULE DE BREVET EUROPEEN

(11) **EP 4 057 855 B1**
(45) Date de publication et mention de la délivrance du brevet: **25.09.2024**
(21) Numéro de dépôt: 20801294.8
(22) Date de dépôt: 11.11.2020
(51) Int. Cl.: B63C 9/125, B60R 21/26, A41D 13/018, B63C 9/18, A42B 3/04

(54) **DISPOSITIF D'INTERFACE D'UN DISPOSITIF DE SÉCURITÉ GONFLABLE INDIVIDUEL**
SCHNITTSTELLENVORRICHTUNG FÜR EINE AUFBLASBARE INDIVIDUELLE SICHERHEITSEINRICHTUNG
INTERFACE DEVICE FOR AN INFLATABLE INDIVIDUAL SAFETY DEVICE

(30) Priorité: 15.11.2019 FR 1912781
(43) Date de publication de la demande: 21.09.2022
(73) Titulaire: Autoliv Development AB, 447 83 Vårgårda (SE)
(72) Inventeur: CORBEL, Sebastien, 29510 LANDREVARZEC (FR); LEVASSEUR, Michael, 29590 Pont-de-Buis-lès-Quimerch (FR); LEJEUNE, Maxime, 29590 Pont-de-Buis-lès-Quimerch (FR); VIGOUROUX, Samuel, 29590 Pont-de-Buis-lès-Quimerch (FR)
(74) Mandataire: Novagraaf International SA
(86) Numéro de dépôt international: PCT/EP2020/081696
(87) Numéro de publication internationale: WO 2021/094342

(56) Documents cités:
- GB-A- 1 439 710
- US-A- 4 161 797
- US-A1- 2010 206 390

## Description

### Domaine technique de l'invention

La présente invention concerne de manière générale le domaine des dispositifs de sécurité individuels qui comprennent un espace interne qui peut être gonflé en cas de situation dangereuse, pour protéger un utilisateur. On peut mentionner les vestes munies de coussins gonflables pour les motards, les gilets de sauvetage gonflables pour les marins, les casques équipés d'une partie gonflable pour les cyclistes, les manteaux ou équipements de ski gonflables à activer en cas d'avalanche... En résumé, l'invention concerne tous les équipements de protection individuels gonflables à porter ou à utiliser pour se protéger d'un choc, d'une chute ou d'une situation dangereuse.

### État de la technique

Il est connu dans l'art antérieur de proposer les dispositifs de sécurité individuels gonflables mentionnés ci dessus avec un générateur de gaz interchangeable, comme par exemple une cartouche de gaz comprimé. Cependant, ces systèmes présentent deux défauts notables. D'une part, un montage incomplet ou incorrect peut provoquer un détachement du générateur de gaz interchangeable et conduire tout d'abord à une perte totale de la fonction de gonflage et même à une blessure (supplémentaire) de l'utilisateur si du gaz propulseur s'échappe et propulse le générateur de gaz interchangeable. D'autre part un montage incomplet ou incorrect peut aussi générer une fuite de gaz de gonflage vers l'extérieur, ce qui diminue ou annule tout l'effet de protection normalement prévu. Le document US2010/206390 A décrit un dispositif d'interface selon le préambule de la revendication 1.

### Exposé de l'invention

Un but de la présente invention est de répondre aux inconvénients de l'art antérieur mentionnés ci-dessus et en particulier, tout d'abord, de proposer un dispositif d'interface pour un dispositif de sécurité gonflable individuel afin de monter aisément un générateur de gaz pour garantir un gonflage complet et sécurisé.

L'invention concerne un dispositif d'interface selon la revendication 1.

Un élément d'étanchéité est prévu entre le générateur de gaz et la pièce de réception selon la mise en oeuvre ci-dessus, si bien qu'une étanchéité peut être garantie, de plus, l'élément de positionnement aide l'utilisateur à naturellement bien monter le générateur de gaz en position finale. En conséquence, le générateur de gaz est correctement maintenu en place et les fuites sont stoppées.

Selon un mode de réalisation, l'élément d'étanchéité peut être agencé pour être déformé d'une valeur nominale par le générateur de gaz en position finale de montage. En conséquence, même si le générateur est monté de manière incomplète, l'élément d'étanchéité pourra tout de même être déformé (moins qu'à sa valeur nominale) et pourra assurer sa fonction d'étanchéité au moins partiellement.

Selon un mode de réalisation, la position finale de montage est unique. En d'autres termes toute position pouvant être prise par le générateur de gaz en dehors de la position finale de montage unique n'est pas une position de fonctionnement finale souhaitée ou recherchée typiquement parce qu'elle peut engendrer un fonctionnement dégradé ou dangereux du dispositif de gonflage individuel. En effet, si le générateur de gaz n'est pas positionné correctement, il pourrait être rejeté lors de la mise à feu ou bien des gaz pourraient ne pas être diriger correctement dans le dispositif de sécurité. Selon un mode de réalisation, le dispositif d'interface comprend un dispositif de verrouillage (en une position de fonctionnement unique), agencé pour verrouiller le générateur de gaz en position finale de montage, de préférence uniquement lorsque ce dernier est, ou arrive, en position finale de montage. En particulier, le dispositif d'interface est agencé pour recevoir sans maintenir en place le générateur de gaz en position finale de montage, et c'est uniquement le dispositif de verrouillage qui assure le maintient en place en position finale de montage ou la fonction anti dégagement de la position finale de montage.

Au surplus, on peut prévoir une position finale de montage unique dans laquelle est verrouillé le générateur de gaz par le dispositif de verrouillage uniquement si le générateur de gaz s'y trouve. En conséquence, le générateur de gaz, tant qu'il n'est pas dans la position finale de montage, n'est pas verrouillé (par le dispositif de verrouillage) et donc pas engagé et fixé (ou monté) au dispositif d'interface.

Le dispositif d'interface comprend un élément de détection agencé pour détecter (directement ou indirectement) le générateur de gaz en position finale de montage. Un tel élément de détection intégré au dispositif d'interface permet de garantir que l'utilisateur ou le dispositif de sécurité aura bien l'information que le générateur de gaz est correctement monté. En particulier, si le générateur de gaz doit effectuer une course de montage entre une position libre et la position finale de montage, alors on entend par détection du générateur de gaz en position finale de montage le fait que l'élément de détection détecte effectivement le générateur de gaz uniquement lorsque le générateur de gaz a effectué au moins 90% de la course de montage, préférentiellement au moins 95% de la course de montage, et plus préférentiellement 100% de la course de montage. En d'autres termes, l'élément de détection n'est activé que lorsque le générateur de gaz arrive en fin de course de montage.

On peut prévoir une détection directe, c'est-à-dire que l'élément de détection effectue la détection du générateur de gaz lui-même, mais on peut tout aussi bien prévoir une détection indirecte, c'est-à-dire qu'il peut y avoir une pièce intermédiaire entre le générateur de gaz et l'élément de détection.

Selon un mode de réalisation, l'élément de détection peut comprendre un capteur de présence, agencé pour être actionné par un organe de référence du générateur de gaz. La détection se fait directement via un organe du générateur de gaz, ce qui évite de prévoir un mécanisme intermédiaire.

Selon un mode de réalisation, l'organe de référence peut être une partie en saille du générateur de gaz, telle qu'un goujon. Une telle partie en saillie (un goujon) peut également servir à maintenir ou retenir le générateur de gaz sur la pièce de réception, ce qui limite le nombre de composants.

Selon un mode de réalisation, le capteur de présence peut être agencé pour être connecté à une unité de commande électronique du dispositif de sécurité gonflable individuel.

Selon un mode de réalisation, ledit au moins un élément de positionnement peut comprendre un élément de rappel élastique agencé pour positionner et maintenir le générateur de gaz dans la position finale de montage. On peut typiquement prévoir un ressort.

Avantageusement l'élément de rappel élastique peut être agencé pour tendre à repousser le générateur de gaz hors de la pièce de réception tant que ce dernier n'est pas dans la position finale de montage unique. Ainsi, l'utilisateur peut comprendre aisément que le générateur de gaz n'est pas en place et que le dispositif de sécurité ne peut pas fonctionnement correctement.

En d'autres termes, et d'une manière générale lors du montage, le générateur de gaz, tant qu'il n'est pas dans la position finale de montage, est dans une position dite "instable" ou "non montée évidente". C'est-à-dire que le générateur de gaz en position intermédiaire de montage ne peut pas rester engagé ou attaché au reste du dispositif de manière stable ou apparemment stable, et l'utilisateur peut immédiatement comprendre que le générateur de gaz n'est pas en position finale de montage. Typiquement, tant que le générateur de gaz n'est pas en position finale de montage, l'utilisateur ne peut pas lâcher le générateur de gaz sans qu'il tombe ou se détache tout seul du reste du dispositif. le dispositif de verrouillage ou l'élément de rappel élastique peuvent contribuer à accentuer cet effet, en repoussant le générateur de gaz hors du reste du dispositif tant que le générateur de gaz n'est pas dans la seule et unique position finale de montage.

Selon un mode de réalisation, ledit au moins un élément de positionnement peut comprendre une piste de guidage avec une portion de repos, la piste de guidage pouvant être agencée pour guider le générateur de gaz vers la position finale de montage, définie par la portion de repos. La piste de guidage forme typiquement une piste de came, et l'organe de référence forme alors le suiveur de came. Pour effectuer le montage, l'utilisateur fait suivre la piste de came à l'organe de référence, ce qui est particulièrement aisé. En conjonction avec la mise en oeuvre avec l'élément de rappel élastique, ce dernier participe même activement à l'aide au montage en poussant le générateur de gaz vers la position finale de montage. On peut prévoir que l'élément de rappel élastique repousse en position démontée le générateur de gaz tant qu'il n'est pas entièrement arrivé en position finale de montage.

Selon un mode de réalisation, on peut prévoir un montage du type ¼ de tour, autrement appelé montage baïonnette.

Selon un mode de réalisation, on peut prévoir un montage du type vissage. En tout état de cause, on peut prévoir un montage faisant intervenir une rotation du générateur de gaz de moins d'un tour (moins de 360°).

Selon un mode de réalisation, la portion de repos peut être agencée pour recevoir l'organe de référence.

Selon un mode de réalisation, l'élément d'étanchéité peut comprendre un joint, de préférence un joint torique.

Selon un mode de réalisation, la pièce de réception peut être un manchon, si le générateur de gaz est de forme tubulaire.

Selon un mode de réalisation, la pièce de réception peut être une plaque ou une platine, si le générateur de gaz comprend une flasque ou un épaulement avec des trous de fixation.

Un deuxième aspect de l'invention concerne un dispositif de sécurité gonflable individuel, comprenant :
- un dispositif d'interface selon la revendication 1,
- une pièce de réception,
- un générateur de gaz,
- un espace interne à gonfler par le générateur de gaz.

Selon un mode de réalisation, le dispositif de sécurité gonflable individuel comprenant une unité de commande électronique, le dispositif d'interface comprenant l'élément de détection connecté à l'unité de commande électronique, et l'unité de commande électronique peut être connectée au générateur de gaz et peut être agencée pour mettre à feu le générateur de gaz, après réception d'une commande de mise à feu, uniquement si le générateur de gaz est détecté en position finale de montage.

Selon un mode de réalisation, l'unité de commande électronique peut être agencée pour avertir un utilisateur si une absence du générateur de gaz en position finale de montage est détectée. En d'autres termes, un utilisateur est averti si le générateur de gaz n'est pas détecté en position finale de montage.

### Description des figures

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
[Fig. 1] représente une vue générale d'un dispositif de sécurité gonflable individuel équipé d'un générateur de gaz et d'un dispositif d'interface selon l'invention,
[Fig. 2] représente une vue en perspective d'une partie du dispositif de sécurité gonflable individuel de la figure 1 ;
[Fig. 3] représente une coupe d'une partie du dispositif de sécurité gonflable individuel de la figure 2.

### Description détaillée de mode(s) de réalisation

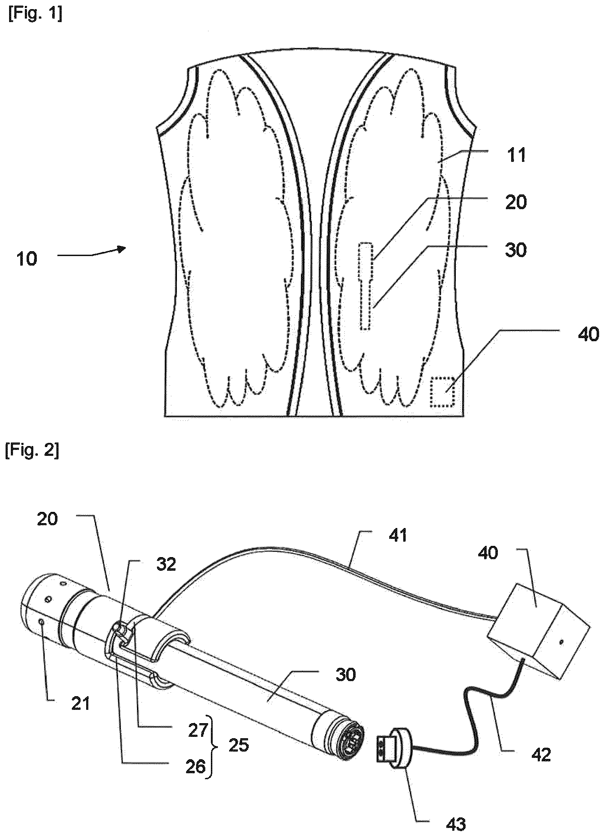

La figure 1 représente une vue générale d'un dispositif de sécurité gonflable individuel 10 équipé d'un générateur de gaz 30 et d'un dispositif d'interface implanté sur une pièce de réception 20 qui reçoit le générateur de gaz 30. Dans cet exemple, le dispositif de sécurité gonflable individuel 10 se présente sous la forme d'un gilet et comprend un espace interne 11 à gonfler par le générateur de gaz 30, en cas de situation dangereuse.

Il est également prévu une unité de commande électronique 40 qui a pour fonction principale de déclencher ou mettre à feu le générateur de gaz 30. On peut prévoir par exemple de déclencher ou mettre à feu le générateur de gaz 30 en cas de détection d'une forte décélération (chute d'un motard par exemple), en cas de détection d'humidité (homme à la mer par exemple) ... En conséquence, l'unité de commande électronique 40 comprend un ou plusieurs capteurs pour détecter les situations dangereuses mentionnées ci-dessus.

Comme le montre la figure 2, le générateur de gaz 30 est monté dans une pièce de réception 20, ici sous la forme d'un manchon. Dans le détail, la pièce de réception 20 comprend un dispositif d'interface 25. Ce dernier comprend notamment une piste de guidage qui forme un élément de positionnement 26 du générateur de gaz 30 pour le positionner et le maintenir dans une position finale de montage (comme représenté figure 2), et un capteur de détection qui forme un élément de détection 27 du générateur de gaz 30 dans la position finale de montage. Dans l'exemple représenté, le générateur de gaz 30 comprend un goujon 32 et c'est cette partie en saillie qui sera détectée par l'élément de détection 27 (un capteur inductif, ou capacitif, ou encore un contacteur électrique).

Le générateur de gaz 30 comprend un allumeur électrique agencé sur l'extrémité libre du générateur de gaz 30, et ce dernier peut être connecté à l'unité de commande électronique 40 via un câble 42 et un connecteur 43. On peut noter que l'unité de commande électronique 40 est également connectée à l'élément de détection 27, si bien que le déclenchement ou mise à feu du générateur de gaz 30 peut être conditionnée au fait que le générateur de gaz 30 est présent et bien en position finale de montage. Au surplus ou en alternative, on peut prévoir d'envoyer un message à l'utilisateur en cas d'utilisation du dispositif de sécurité gonflable individuel 10 alors que le générateur de gaz 30 n'est pas présent et/ou pas bien en position finale de montage. En conséquence, l'utilisation du dispositif de sécurité gonflable individuel 10 est sécurisée avec un générateur de gaz 30 correctement monté.

La figure 2 montre aussi la piste de guidage formant l'élément de positionnement 26, et le goujon 32 reçu dans un renfoncement de la piste de guidage. Un tel montage, du type ¼ de tour est aisé à réaliser par un utilisateur même sans expérience, si bien que les risques de montage incomplet sont fortement réduits.

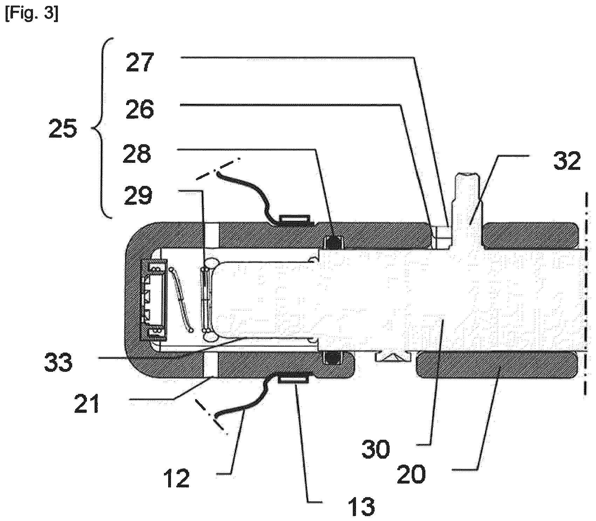

De plus, et comme le montre la figure 3 qui est une coupe de la pièce de réception 20, il est prévu un ressort 29 qui complète le dispositif d'interface 25, pour pousser le générateur de gaz 30 et son goujon 32 dans le renfoncement de la piste de guidage. En conséquence, la position finale de montage est une position stable, et si le générateur de gaz 30 n'est pas complètement engagé, alors le ressort 29 peut soit finir de le pousser dans la position finale de montage, soit le repousser hors de la pièce de réception 20, si bien que l'utilisateur verra de lui-même que le montage est incomplet.

Enfin, la figure 3 montre que la pièce de réception 20 comprend des orifices de diffusion 21 qui donnent dans l'espace interne 11 délimité par une paroi souple 12 fixée à la pièce de réception 20 par un collier 13. Ainsi, des gaz générés par le générateur de gaz 30, et diffusés via un diffuseur 33 seront dirigés vers l'espace interne 11, via les trous de diffusion 21.

Afin de garantir un gonflage complet, il est prévu d'intégrer dans le dispositif d'interface 25 un élément d'étanchéité 28, qui est un joint torique dans le cas présent. Cependant, d'autres types de joint sont possibles (joint à lèvre, bague déformable...).

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

En particulier, il est fait référence à un gilet individuel, mais on peut envisager tout type de dispositif de sécurité portable ou portatif, c'est-à-dire un casque, un harnais, une ceinture...

De plus, une interface de montage de type ¼ de tour a été décrite, mais on peut envisager un clipsage, un vissage, une combinaison de ces liaisons. Il s'agit en effet de proposer un assemblage simple, et/ou sans outil spécifique, et/ou réversible.

Enfin, le dispositif d'interface est implanté ici dans la pièce de réception, mais on peut envisager une pièce distincte, ou plusieurs pièces qui coopèrent ensemble.

## Revendications

1. Dispositif d'interface (25) d'un dispositif de sécurité gonflable individuel (10), agencé pour maintenir un générateur de gaz (30) dans une pièce de réception (20) du dispositif de sécurité gonflable individuel (10), comprenant
- au moins un élément de positionnement (26), agencé pour positionner et maintenir le générateur de gaz (30) selon une position finale de montage dans la pièce de réception (20),
- un élément d'étanchéité (28), agencé entre la pièce de réception (20) et le générateur de gaz (30) positionné et maintenu par ledit au moins un élément de positionnement (26), pour procurer une étanchéité à un espace interne du dispositif de sécurité à gonfler par le générateur de gaz (30), **caractérisé en ce qu'**il comprend:
- un élément de détection (27), agencé pour détecter le générateur de gaz (30) en position finale de montage.

2. Dispositif d'interface (25) selon la revendication 1, dans lequel l'élément de détection (27) comprend un capteur de présence, agencé pour être actionné par un organe de référence du générateur de gaz (30).

3. Dispositif d'interface (25) selon la revendication 2, dans lequel l'organe de référence est une partie en saille du générateur de gaz (30), telle qu'un goujon (32).

4. Dispositif d'interface (25) selon la revendication 2 ou 3, dans lequel le capteur de présence est agencé pour être connecté à une unité de commande électronique (40) du dispositif de sécurité gonflable individuel (10).

5. Dispositif d'interface (25) selon l'une des revendications 1 à 4, dans lequel ledit au moins un élément de positionnement (26) comprend un élément de rappel élastique agencé pour positionner et maintenir le générateur de gaz (30) dans la position finale de montage.

6. Dispositif d'interface (25) selon l'une des revendications 1 à 5, dans lequel ledit au moins élément de positionnement (26) comprend une piste de guidage avec une portion de repos, la piste de guidage étant agencée pour guider le générateur de gaz (30) vers la position finale de montage, définie par la portion de repos.

7. Dispositif d'interface (25) selon la revendication 6, dans sa dépendance à la revendication 3, dans lequel la portion de repos est agencée pour recevoir l'organe de référence.

8. Dispositif d'interface (25) selon l'une des revendications 1 à 7, dans lequel l'élément d'étanchéité (28) comprend un joint, de préférence un joint torique.

9. Dispositif de sécurité gonflable individuel (10), comprenant :
- un dispositif d'interface (25) selon l'une des revendications 1 à 8,
- une pièce de réception (20),
- un générateur de gaz (30),
- un espace interne à gonfler par le générateur de gaz (30).

10. Dispositif de sécurité gonflable individuel (10) selon la revendication 9 avec le dispositif d'interface (25) selon la revendication 4 et comprenant l'unité de commande électronique (40),
dans lequel l'unité de commande électronique (40) est connectée au générateur de gaz (30) et agencée pour mettre à feu le générateur de gaz (30), après réception d'une commande de mise à feu, si le générateur de gaz (30) est détecté en position finale de montage.

11. Dispositif de sécurité gonflable individuel (10) selon la revendication 10, dans lequel l'unité de commande électronique (40) est agencée pour avertir un utilisateur si le générateur de gaz (30) n'est pas détecté en position finale de montage.

## Patentansprüche

1. Schnittstellenvorrichtung (25) einer individuellen aufblasbaren Sicherheitsvorrichtung (10), die zum Halten eines Gasgenerators (30) in einem Aufnahmestück (20) der individuellen aufblasbaren Sicherheitsvorrichtung (10) angeordnet ist, umfassend
- mindestens ein Positionierungselement (26), das zum Positionieren und Halten des Gasgenerators (30) in einer Endmontageposition in dem Aufnahmestück (20) angeordnet ist,
- ein Dichtungselement (28), das zwischen dem Aufnahmestück (20) und dem Gasgenerator (30) angeordnet ist, das durch das mindestens eine Positionierungselement (26) positioniert und gehalten wird, um eine Abdichtung gegenüber einem Innenraum der durch den Gasgenerator (30) aufzublasenden Sicherheitsvorrichtung bereitzustellen, **dadurch gekennzeichnet, dass** es umfasst:
- ein Erfassungselement (27), das zum Erfassen des Gasgenerators (30) in der Endmontageposition angeordnet ist.

2. Schnittstellenvorrichtung (25) nach Anspruch 1, wobei das Erfassungselement (27) einen Anwesenheitssensor umfasst, der zum Betätigtwerden durch ein Referenzmittel des Gasgenerators (30) angeordnet ist.

3. Schnittstellenvorrichtung (25) nach Anspruch 2, wobei das Referenzmittel ein vorstehendes Teil des Gasgenerators (30), wie ein Stift (32), ist.

4. Schnittstellenvorrichtung (25) nach Anspruch 2 oder 3, wobei der Anwesenheitssensor zum Verbundenwerden mit einer elektronischen Steuereinheit (40) der individuellen aufblasbaren Sicherheitsvorrichtung (10) angeordnet ist.

5. Schnittstellenvorrichtung (25) nach einem der Ansprüche 1 bis 4, wobei das mindestens eine Positionierungselement (26) ein elastisches Rückstellelement umfasst, das zum Positionieren und Halten des Gasgenerators (30) in der Endmontageposition angeordnet ist.

6. Schnittstellenvorrichtung (25) nach einem der Ansprüche 1 bis 5, wobei das mindestens Positionierungselement (26) eine Führungsbahn mit einem Ruheabschnitt umfasst, wobei die Führungsbahn zum Führen des Gasgenerators (30) in Richtung der Endmontageposition, die durch den Ruheabschnitt definiert wird, angeordnet ist.

7. Schnittstellenvorrichtung (25) nach Anspruch 6, abhängig von Anspruch 3, wobei der Ruheabschnitt zum Aufnehmen des Referenzmittels angeordnet ist.

8. Schnittstellenvorrichtung (25) nach einem der Ansprüche 1 bis 7, wobei das Dichtungselement (28) ein Gelenk, vorzugsweise einen O-Ring, umfasst.

9. Individuelle aufblasbare Sicherheitsvorrichtung (10), umfassend:
- eine Schnittstellenvorrichtung (25) nach einem der Ansprüche 1 bis 8,
- ein Aufnahmestück (20),
- einen Gasgenerator (30),
- einen durch den Gasgenerator (30) aufzublasenden Innenraum.

10. Individuelle aufblasbare Sicherheitsvorrichtung (10) nach Anspruch 9 mit der Schnittstellenvorrichtung (25) nach Anspruch 4 und umfassend die elektronische Steuereinheit (40),
wobei die elektronische Steuereinheit (40) mit dem Gasgenerator (30) verbunden und zum Zünden des Gasgenerators (30) nach Erhalt eines Zündbefehls angeordnet ist, wenn der Gasgenerator (30) in der Endmontageposition erfasst wird.

11. Individuelle aufblasbare Sicherheitsvorrichtung (10) nach Anspruch 10, wobei die elektronische Steuereinheit (40) zum Warnen eines Benutzers angeordnet ist, wenn der Gasgenerator (30) in der Endmontageposition nicht erfasst wird.

## Claims

1. Interface device (25) of an inflatable individual safety device (10), arranged to hold a gas generator (30) in a receiving part (20) of the inflatable individual safety device (10), comprising
- at least one positioning element (26), arranged to position and hold the gas generator (30) in a final mounting position in the receiving part (20),
- a sealing element (28), arranged between the receiving part (20) and the gas generator (30), which is positioned and held by said at least one positioning element (26), for providing sealing to an internal space of the safety device to be inflated by the gas generator (30), **characterized in that** it comprises:
- a detection element (27), arranged to detect the gas generator (30) in the final mounting position.

2. Interface device (25) according to claim 1, wherein the detection element (27) comprises a presence sensor, arranged to be actuated by a reference member of the gas generator (30).

3. Interface device (25) according to claim 2, wherein the reference member is a part projecting from the gas generator (30), such as a pin (32).

4. Interface device (25) according to claim 2 or 3, wherein the presence sensor is arranged to be connected to an electronic control unit (40) of the inflatable individual safety device (10).

5. Interface device (25) according to one of claims 1 to 4, wherein said at least one positioning element (26) comprises a resilient return element arranged to position and hold the gas generator (30) in the final mounting position.

6. Interface device (25) according to one of claims 1 to 5, wherein said at least positioning element (26) comprises a guide track with a rest portion, the guide track being arranged to guide the gas generator (30) toward the final mounting position, defined by the rest portion.

7. Interface device (25) according to claim 6, in its dependence on claim 3, wherein the rest portion is arranged to receive the reference member.

8. Interface device (25) according to one of claims 1 to 7, wherein the sealing element (28) comprises a seal, preferably an O-ring seal.

9. Inflatable individual safety device (10), comprising:
- an interface device (25) according to one of claims 1 to 8,
- a receiving part (20),
- a gas generator (30),
- an internal space to be inflated by the gas generator (30).

10. Inflatable individual safety device (10) according to claim 9 with the interface device (25) according to claim 4 and comprising the electronic control unit (40),
wherein the electronic control unit (40) is connected to the gas generator (30) and arranged to ignite the gas generator (30), after receiving an ignition command, if the gas generator (30) is detected in the final mounting position.

11. Inflatable individual safety device (10) according to claim 10, wherein the electronic control unit (40) is arranged to warn a user if the gas generator (30) is not detected in the final mounting position.
